# EUROPÄISCHE PATENTANMELDUNG

(11) **EP 0 847 946 A1**
(43) Veröffentlichungstag der Anmeldung: **17.06.1998**
(21) Anmeldenummer: 96119735.7
(22) Anmeldetag: 10.12.1996
(51) Int. Cl.: B65G 69/18

(54) **Vorrichtung zum Austragen von Schüttgut aus einem Behälter**

(71) Anmelder: ANAG A. Nussbaumer AG, 2186 Düdingen (CH)
(72) Erfinder: Leva, Daniel, 1635 La Tour-de-Trême (CH)
(74) Vertreter: Stocker, Kurt

(57) **Zusammenfassung**

Eine Austragsvorrichtung eines Silos (1), die dicht mit einem Aufnahmegefäss (17) verbindbar ist, umfasst am Siloverschluss (3) mindestens ein Greifelement, das zwischen einer Halte- und einer Freigabeposition bewegbar ist und das Erfassen und Loslassen eines Kopplungsbereiches (27) des Deckels (26) des Aufnahmegefässes (17) ermöglicht. Das Greifelement - etwa ein Bolzen (7) - und der Kopplungsbereich (27) sind so ausgebildet, dass in einer Halteposition des Greifelementes dieses kraftschlüssig mit dem Deckel (26) verbunden ist. In der Freigabeposition sind das Silo (1) und das Aufnahmegefäss (17) mit dem Deckel (26) zumindest in der Richtung einer zentralen Achse (9) bis an einen Kopplungs-Anschlag relativ zueinander bewegbar. Am Kopplungsanschlag kann das mindestens eine Greifelement kraftschlüssig mit dem Deckel (26) verbunden werden. Durch das Öffnen, bzw. Anheben des Siloverschlusses (3) wird auch der damit verbundene Deckel (26) vom Aufnahmegefäss (17) abgenommen. Durch den dabei entstehenden ringförmigen Durchtrittsbereich (32) gelangt das Schüttgut vom Silo (1) in das Aufnahmegefäss (17).

## Beschreibung

Die Erfindung bezieht sich auf eine Vorrichtung zum Austragen von Schüttgut nach dem Oberbegriff des Anspruches 1.

Die in einem Vorratsbehälter, insbesondere einem Silo, aufbewahrten Schüttgüter werden durch eine untenliegende Auslassöffnung in gewünschten Mengen an ein daran anschliessendes Aufnahmegefäss mit obenliegender Befüllöffnung abgegeben. Um den beim Abfüll-Vorgang frei werdenden Produkteanteil, bzw. Staubanteil, möglichst klein zu halten, wird die Austragsvorrichtung und das Aufnahmegefäss so ausgebildet, dass diese beiden Aufnahmevorrichtungen im verschlossenen Zustand miteinander verbindbar sind. Erst nach dem dichten Verbinden wird die Befüllöffnung des Aufnahmegefässes durch Abheben eines Deckels zumindest teilweise freigegeben. Zum Abheben des Deckels wird gemäss der WO 94/19265 ein vom Siloverschluss bis zum Deckel vorstehendes Saugelement verwendet. Der Deckel wird durch den zwischen der Deckeloberfläche und einem Saugbereich des Saugelementes aufbaubaren Unterdruck am Saugelement gehalten und aufgrund einer Bewegung des Siloverschlusses mit dem Saugelement gegen das Siloinnere, bzw. nach oben, von der Befüllöffnung des Aufnahmebehälters abgehoben. Durch diese Bewegung entsteht eine ringförmige, nach aussen abgeschlossene, Verbindung vom Siloinnenraum zum Innenraum des Aufnahmegefässes. Zum Verschliessen der Auslassöffnung des Silos und der Befüllöffnung des Aufnahmegefässes wird der Siloverschluss mit dem Saugelement soweit abgesenkt, dass Silo und Aufnahmegefäss wieder je dicht verschlossen sind.

Wenn das Silo, bzw. das Aufnahmegefäss nicht mit einer entsprechenden Vorrichtung verbunden ist, also zwischen den Abfüllvorgängen, kann sich Staub am Saugelement bzw. an der Deckeloberfläche absetzen. Dieser Staub kann die dichte Saug-Verbindung zwischen dem Saugelement und dem Deckel beeinträchtigen, was zum Abfallen des Deckels und somit zum Ende eines dosierten Schüttgutübertrittes vom Silo in das Aufnahmegefäss führen kann. Ein abgefallener, schief in der Öffnung des Aufnahmegefässes liegender Deckel und nachströmendes Schüttgut könnten das Schliessen der ringförmigen Verbindung vom Siloinnenraum zum Innenraum des Aufnahmegefässes verhindern, weil das vollständige Absenken des Siloverschlusses verunmöglicht wird. Bei Gefahrenstoffen müsste ein aufwendiges Entleerungs- und Trennungsprozedere durchgeführt werden. Die Gefahr, dass sich die Saugverbindung löst, ist insbesondere bei Austragsvorrichtungen mit Vibrations-Elementen, wie etwa einem über dem Siloverschluss angeordneten Vibrationskegel, erhöht.

Die Aufgabe der Erfindung besteht nun darin, eine Vorrichtung zu beschreiben, mit der der Deckel des Aufnahmegefässes sicher gehalten, abgehoben, aufgesetzt und wieder freigegeben werden kann.

Die Lösung der Aufgabe gelingt durch die Verwirklichung der Merkmale des Anspruches 1.

Zur Lösung der Aufgabe wird am Siloverschluss mindestens ein Greifelement angeordnet, das zwischen einer Halte- und einer Freigabeposition bewegbar ist und das Erfassen und Loslassen eines Kopplungsbereiches des Deckels ermöglicht. Das Greifelement und der Kopplungsbereich sind so ausgebildet, dass in einer Halteposition des Greifelementes dieses kraftschlüssig mit dem Deckel verbunden ist. In der Freigabeposition sind das Silo und das Aufnahmegefäss mit dem Deckel zumindest in einer Richtung bis an einen Kopplungs-Abschlag relativ zueinander bewegbar. Am Kopplungsanschlag kann das mindestens eine Greifelement kraftschlüssig mit dem Deckel verbunden werden, bzw. kann diese Verbindung gelöst werden.

Zum Führen der Bewegung eines Greifelementes ist mindestens eine Schwenk- und/oder eine Geradführung vorgesehen. In einer bevorzugten Ausführung sind etwa drei Bolzen relativ zu einer zentralen Achse radial ausgerichtet bzw. bewegbar und gleichbeabstandet um die zentrale Achse angeordnet. Als Betätigungsvorrichtung zum Bewegen mindestens eines Greifelementes wird etwa ein Zylinder-Kolbenelement und eine Fluid-Verbindungsleitung zum Druck-Beaufschlagen des Zylinder-Kolbenelementes, oder aber gegebenenfalls eine mechanische Übertragungsvorrichtung verwendet. In einer bevorzugten Ausführung ist dabei ein als Greifelement ausgebildeter Bolzen auch gleich als Kolben des Zylinder-Kolbenelementes verwendbar. Die Ausgestaltung der Greifelemente und des Kopplungsbereiches sind aneinander angepasst, wobei vorzugsweise der Kopplungsbereich den Bereich mit den Greifelementen umschliesst.

Die Zeichnungen erläutern die Erfindung anhand schematisch dargestellter Beispiele. Dabei zeigt
- Fig. 1:: einen vertikalen Schnitt durch den unteren Endbereich eines Silos und den damit verbundenen oberen Endbereich eines Aufnahmegefässes;
- Fig. 2:: einen vertikalen Schnitt durch das Aufnahmegefäss und das Silo mit einem Siloverschluss und einem darüber angeordneten Betätigungskonus; und
- Fig. 3:: einen vertikalen Schnitt durch das Aufnahmegefäss und das Silo mit einem Siloverschluss und einem darüber angeordneten inneren Schliess- und Vibrationskonus.

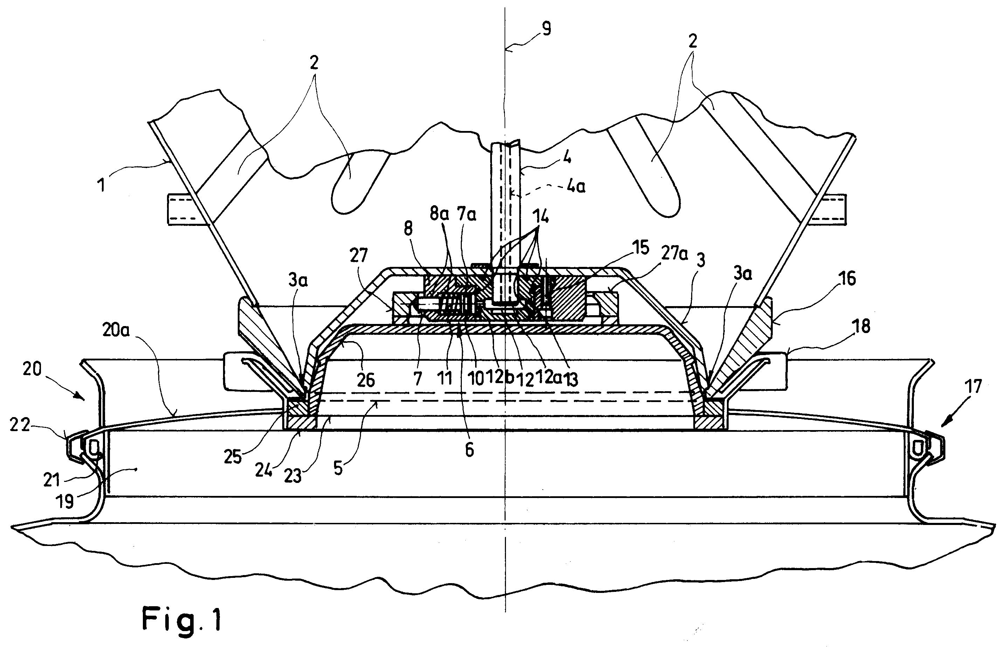

Fig. 1 zeigt von einem Silo 1 das Auslasstrichter-Ende, an dem Haltestäbe 2 befestigt sind und das am unteren Ende eine Austragsöffnung 5 hat. Die Haltestäbe 2 tragen eine nicht dargestellte Hebevorrichtung zum Heben und Senken eines Siloverschlusses 3, bzw. eines mit diesem verbundenen Tragelementes 4. Der äussere Berandungsbereich 3a des Siloverschlusses 3 ist als an die Austragsöffnung 5 angepasster Dichtungsbereich ausgebildet. Das Tragelement 4 ist vorzugsweise als Rohr ausgebildet, das als Fluidleitung 4a eine Fluidspeisung mit mindestens einem Zylinder-Kolbenelement 6 beim Siloverschluss 3 verbindbar macht. Die Fluidspeisung erfolgt etwa über eine zentrale Durchführung in einem Haltestab 2. Der Kolben des Zylinder-Kolbenelementes 6 ist als Bolzen 7 ausgebildet, der in einer zylindrischen Bohrung 8a eines Führungsteiles 8, vorzugsweise radial zu einer zentralen Siloachse 9, zwischen einer Halte- und einer Freigabeposition bewegbar ist. Es sind vorzugsweise drei, gegebenenfalls zwei oder auch mehr als drei, zur zentralen Achse radial ausgerichtete Bolzen 7 in gleichen Winkelabständen angeordnet.

In der dargestellten Ausführungsform ist der Bolzen 7 mit seinen beiden Endbereichen in zwei Teilbereichen der Bohrung 8a mit unterschiedlich grossen Durchmessern geführt. Der Bolzen 7 hat an dem der zentralen Achse 9 zugewandten Ende einen ersten Endbereich 7a mit vergrössertem Durchmesser und eine Nut mit einer Dichtung 10. Auf der von der zentralen Achse abgewandten Seite des ersten Endbereiches 7a ist eine Feder 11 über dem Bolzen 7 in einem Teilbereich der Bohrung 8a angeordnet, so dass der Bolzen 7 gegen die zentrale Achse 9 in die Freigabeposition gepresst wird. Auf der der zentralen Achse 9 zugewandten Seite des Bolzens 7 bzw. des Endbereiches 7a ist eine Fluidzuführung 12 in die Bohrung 8a angeordnet, so dass der Bolzen 7 von druckbeaufschlagtem Fluid, vorzugsweise Luft, gegebenenfalls aber auch Flüssigkeit, gegen die Federkraft von der zentralen Achse 9 weg in die Halteposition bewegbar ist.

Die Fluidzuführung 12 ist in einem Übergangsteil 13 ausgebildet, das an der Unterseite des Siloverschlusses 3 mit diesem, bzw mit dem Tragelement 4 verbunden ist. Die Fluidleitung 4a mündet in einen Verteilraum 12a, von dem mindestens eine, vorzugsweise aber drei, insbesondere in gleichen Winkelabständen angeordnete, radial verlaufende Verbindungsleitungen 12b zu den Bohrungen 8a führen. Zum dichten Verbinden des Übergangsteiles mit dem Führungsteil 8 sind Dichtungen 14 und Schrauben 15 vorgesehen.

Um das Austragsende des Silos 1 beschädigungsfrei dicht mit einem Aufnahmegefäss 17 in Verbindung bringen zu können, ist die Austragsöffnung 5 in einem gegen die Austragsöffnung konisch verjüngten Ring 16 ausgebildet, der vorzugsweise eine gegenüber der Silowand erhöhte Wandstärke aufweist und insbesondere etwa aus einem elastischen Material besteht. An der Gefässoberseite muss ein an die Konizität der Aussenseite des Ringes 16 angepasster Anschlussbereich 18 vorgesehen sein. Bei Aufnahmegefässen 17, deren Befüllöffnungen 19 nicht direkt mit einem an den Ring 16 angepassten Anschlussbereich 18 versehen sind, wird etwa ein Gefässabschluss 20 an der Befüllöffnung 19 angeschlossen. Eine Dichtung 21 und ein Klemmring 22 gewährleisten eine dichte Verbindung zwischen dem Gefäss und dem Gefässabschluss 20. Im Deckenbereich 20a ist eine Anschlussöffnung 23 ausgebildet und von einem Auflagering 24 und von einem Dichtungsring 25 umgeben. Ein Deckel 26 schliesst die Anschlussöffnung 23 dicht ab. Der Anschlussbereich 18 geht im wesentlichen vom Dichtungsring 25 aus.

Die Oberseite des Deckels 26 passt von unten in den Siloverschluss 3. Auf der Deckeloberseite befindet sich eine Kopplungsvorrichtung 27 in der Form eines Ringes mit einem am oberen Ende nach innen vorstehenden Haltebereich 27a, an dem die Bolzen 7 in der Halteposition mit dem vorstehenden Ende von unten anliegen. Der Aussenradius des Führungsteils 8 ist etwas kleiner als der Innenradius des Haltebereiches 27a, so dass der Führungsteil 8 mit den Bolzen 7 in der Freigabeposition von oben in die Kopplungsvorrichtung 27 eingeführt werden kann.

Das Führungsteil 8 und das Übergangsteil 13 könnte je so ausgebildet werden, dass die Bolzen 7 durch die Federn 11 in die Halteposition gepresst werden und der Fluiddruck, gegebenenfalls auch ein Unterdruck zum Bewegen der Bolzen 7 in die Freigabeposition eingesetzt wird.

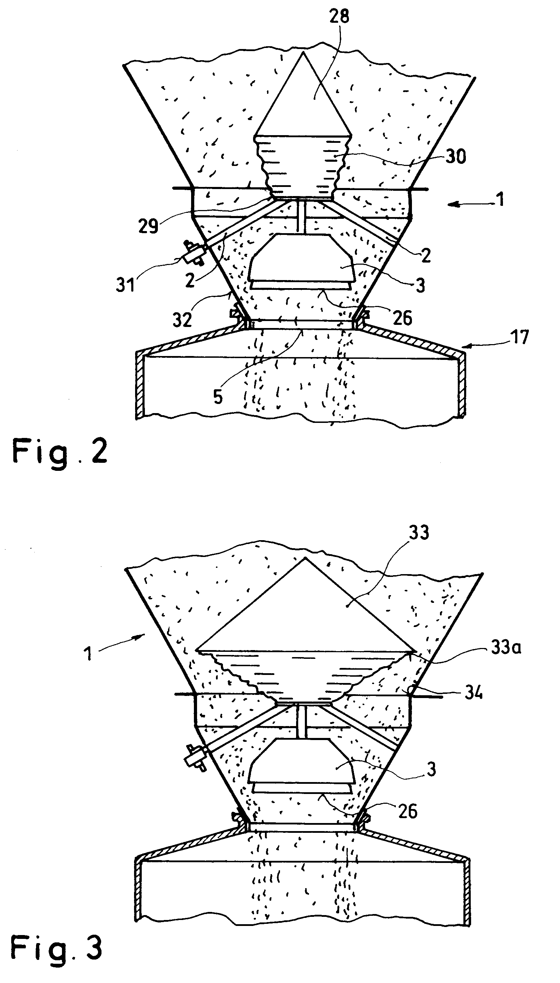

Fig. 2 zeigt das Aufnahmegefäss 17 und das Silo 1 mit einem Siloverschluss 3 und einem darüber angeordneten Betätigungskonus 28, der zum Heben des Siloverschlusses 3 bzw. des Tragelementes 4 ausgebildet ist. Beim Verwenden eines fluidbetriebenen Balges wird der Balg zwischen einer durch die Haltestäbe 2 gehaltenen Tragplatte 29 und dem Konus 28 angeordnet. Durch das Befüllen des Balges wird dieser gestreckt, so dass sich der Konus 28 mitsamt dem Siloverschluss 3 und dem daran gehaltenen Deckel 26 des Aufnahmegefässes hebt. Bei schlecht fliessenden Schüttgütern ist es gegebenenfalls zweckmässig, wenn der Konus 28 in Vibration versetzbar ist. Dazu wird etwa der zum Heben verwendete Balg über das Fluid mit Druckschwankungen beaufschlagt.

Um den Eintritt von Schüttgut in den Konus 28 zu verhindern, ist zwischen dem Konus 28 und der Tragplatte 29 eine elastische Abdeckfläche 30 angeordnet. Es versteht sich von selbst, dass auch Hebevorrichtungen für den Siloverschluss in einem unbewegten Konus 28 angeordnet werden können. Zum Speisen von fluidbetätigten Hebevorrichtungen ist ein Fluidanschluss 31 am einem Haltestab 2 vorgesehen.

Nach dem Anheben des Siloverschlusses 3 mit dem Deckel 26 entsteht zwischen dem oberen Silobereich und dem Aufnahmegefäss 17 ein ringförmiger Verbindungsbereich 32, durch den das Schüttgut vom Silo in das Aufnahmegefäss 17 gelangt.

Fig. 3 zeigt eine Lösung, bei der über dem Siloverschluss 3 ein innerer Schliess- und Vibrationskonus 33 angeordnet ist, dessen Aussenberandungslinie 33a dicht an einen inneren Verschussbereich 34 des Silos 1 anliegen kann. Der Siloverschluss 3 mit dem Deckel 26 ist etwa zusammen mit dem Schliesskonus 33, gegebenenfalls aber auch unabhängig davon auf- und ab-bewegbar.

Die Beispiele der Figuren 2 und 3 zeigen, dass ein Siloverschluss 3, bzw. ein Verschlussmittel, mit Greifelementen zum Erfassen und Loslassen eines Kopplungsbereiches des Deckels 26 vielfältig einsetzbar ist. Ein sicheres Halten wird auch bei angesetztem Staub gewährleistet. Selbst bei Vibrationen, die an den Siloverschluss 3 übertragen werden, besteht keine Gefahr dafür, dass sich der Deckel 26 vom Siloverschluss löst.

Im Rahmen der Erfindung sind zahlreiche Abänderungen möglich; beispielsweise kann der Kopplungsbereich des zu hebenden Deckels als an einem axial verlaufenden Stift oder Halsteil befestigter Konus mit nach oben gerichteter Spitze ausgebildet sein, wobei der Konus gegenüber dem Halsteil eine Schulter mit nach unten gerichteter Ringfläche bildet. An dieser Schulter vermag dann ein nach Art eines Kran- oder Baggergreifers ausgebildetes, zangenförmiges und dabei um ein Schwenklager schwenkendes Werkzeugpaar unter der Wirkung einer Antriebseinrichtung, wie eines Zylinder-Kolben-Aggregates anzugreifen.

## Patentansprüche

1. Vorrichtung zum Austragen von Schüttgut aus einem Behälter mit einer untenliegenden, um eine zentrale Achse (9) angeordneten, Auslassöffnung (5) und einem Verschlussmittel zum Halten des Deckels (26) eines Aufnahmegefässes (17) und zum wahlweisen Verschliessen und Öffnen einer gegen aussen dichten Durchtrittsverbindung (32) vom Siloinneren in das Aufnahmegefäss (17), **dadurch gekennzeichnet, dass** das Verschlussmittel mindestens ein zwischen einer Halte- und einer Freigabeposition bewegbares Greifelement zum Erfassen und Loslassen eines Kopplungsbereiches (27) des Deckels (26) umfasst.

2. Vorrichtung nach Anspruch 1, **dadurch gekennzeichnet, dass**, mindestens ein Greifelement quer, insbesondere radial, zur zentralen Achse (9) bewegbar gelagert ist.

3. Vorrichtung nach Anspruch 2, **dadurch gekennzeichnet, dass**, das Verschlussmittel zum Führen der Bewegung eines Greifelementes mindestens eine Schwenk-, vorzugsweise aber mindestens eine Geradführung umfasst.

4. Vorrichtung nach einem der Ansprüche 1 bis 3, **dadurch gekennzeichnet, dass** das Verschlussmittel als Betätigungsvorrichtung zum Bewegen mindestens eines Greifelementes ein Zylinder-Kolbenelement und eine Fluid-Verbindungsleitung (4a, 12) zum Druck-Beaufschlagen des Zylinder-Kolbenelementes, oder aber gegebenenfalls eine mechanische Übertragungsvorrichtung umfasst.

5. Vorrichtung nach einem der Ansprüche 1 bis 4, **dadurch gekennzeichnet, dass** mindestens ein Greifelement als Bolzen (7) ausgebildet ist, der in einer Geradführung von einer Feder (11) in einer ersten Richtung gegen einen ersten Anschlag und von einer Betätigungsvorrichtung in der der ersten entgegengesetzten Richtung gegen einen zweiten Anschlag bewegbar ist.

6. Vorrichtung nach Anspruch 5, **dadurch gekennzeichnet, dass** der Bolzen (7) am zweiten, gegebenenfalls aber am ersten, Anschlag mit einem vorderen Teil in einer Ausnehmung des Kopplungsbereiches (27) des Deckels (26) liegt.

7. Vorrichtung nach Anspruch 5 oder 6, **dadurch gekennzeichnet, dass** zwei, vorzugsweise drei, gegebenenfalls auch mehr als drei, zur zentralen Achse (9) radial ausgerichtete Bolzen (7) in gleichen Winkelabständen angeordnet sind.
